# EUROPÄISCHE PATENTSCHRIFT

(11) **EP 0 694 738 B1**
(45) Veröffentlichungstag und Bekanntmachung des Hinweises auf die Patenterteilung: **08.12.1999**
(21) Anmeldenummer: 95109663.5
(22) Anmeldetag: 22.06.1995
(51) Int. Cl.: F23Q 7/24, F23Q 7/10, F23N 5/20, H02M 5/257

(54) **Feuerungsautomat**
Automatic ignition device
Appareil automatique d'allumage

(30) Priorität: 26.07.1994 CH 234694
(43) Veröffentlichungstag der Anmeldung: 31.01.1996
(73) Patentinhaber: Landis & Gyr Technology Innovation AG, 6301 Zug (CH)
(72) Erfinder: Kölmel, Harry, D-76532 Baden-Baden (DE)
(74) Vertreter: Müller, Hans-Jürgen, Dipl.-Ing.

(56) Entgegenhaltungen:
- WO-A-88/10400
- DE-U- 9 310 461
- GB-A- 2 104 683

## Beschreibung

Die Erfindung bezieht sich auf einen Feuerungsautomaten gemäß dem Oberbegriff des Anspruchs 1.

Solche Feuerungsautomaten eignen sich beispielsweise zur Steuerung des Inbetdebsetzungsvorgangs für einen Brenner zur Wärmeerzeugung in einem Heizungssystem, bei dem als Brennstoff Gas zur Anwendung kommt.

Es ist ein Feuerungsautomat dieser Art bekannt (US-C-4,099,906), bei dem als Zündelement für das Gas-Luft-Gemisch ein unter dem Begriff "Hot Surface Igniter" bekannter Glühzünder verwendet wird. Solche Glühzünder sind in Ländem mit einem 120 Volt-Wechselstrom-Netz seit Jahren gebräuchlich und am Markt erhältlich. Die Herstellung solcher Glühzünder für den Betrieb mit 230 Volt scheitert an den Eigenschaften des für solche Glühzünder verwendbaren Materials, das beispielsweise Siliziumcarbid sein kann. Deshalb sind solche Glühzünder noch nicht erhältlich.

Es bieten sich mehrere Möglichkeiten an, einen für den Betrieb mit 120 Volt ausgelegten Glühzünder an einem 230 Volt-Netz zu betreiben. Einmal besteht die Möglichkeit, einen Transformator anzuwenden, um die Spannung von 230 Volt auf 120 Volt herunterzutransfomnieren. Angesichts der benötigten Leistung von etwa 400 Watt hätte ein solcher Transformator ein Volumen, das in einem der üblichen Gehäuse eines Feuerungsautomaten nicht unterzubringen wäre. Wegen der Platzverhältnisse an einem Brenner kann das Gehäuse aber nicht vergrößert werden. Zudem wäre ein solcher Transformator ein wesentlicher Kostenfaktor.

Als Altemative bietet sich die Anwendung einer Phasenanschnitts-Steuerung mittels Thyristoren an. Diese wiederum hat den Nachteil, daß es notwendig wäre, beträchtlichen Aufwand an Entstörmitteln zu treiben, um die bei solchen Schaltungen unweigerlich auftretenden Funkstörungen auf ein den einschlägigen Vorschriften entsprechendes Maß zu dämpfen. Angesichts der großen Leistung nehmen diese Entstörmittel ihrerseits auch einen großen Raum ein.

Eine besonders vorteilhafte Altemative ist in DE-U1-93 10 461 beschrieben. Hier wird der Glühzünder mit einer getakteten Netzspannung betrieben, wobei nur einige der Vollwellenzüge am Glühzünder wirksam sind. Damit sind ganzzahlige Tastverhältnisse, z.B. 1:3, 1:4, 1:5 erreichbar, mit einer vorteilhaften Ausgestaltung auch halb-ganzzahlige, z.B. 1:3,5 oder 1:4,5. In Abhängigkeit von der tatsächlichen Höhe der Netzspannung wird das Tastverhältnis automatisch so geändert, daß die am Glühzünder umgesetzte Leistung annähemd konstant bleibt. Mit der Ansteuerung eines Glühzünders mit Tastverhältnissen in den Abstufungen 1:3, 1:3,5, 1:4, 1:4,5 usw. ist eine feinstufige oder wirklich genaue Leistungsanpassung nicht möglich.

Der Erfindung liegt die Aufgabe zugrunde, einen Feuerungsautomaten zu schaffen, bei dem die Ansteuerung eines Glühzünders hinsichtlich der Leistungskonstanz bei schwankender Netzspannung verbessert ist.

Die genannte Aufgabe wird erfindungsgemäß durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1-4: ein generelles Schema einer Ansteuerschaltung für einen Glühzünder gemäß DE-U1-9310461
- Fig. 5: ein Schema einer Ausführungsform der Erfindung und
- Fig.6: ein Diagramm des sich einstellenden Tastverhältnisses für die erfindungsgemäße Ausführungsform im Vergleich mit der vorbekannten Ausführungsform.

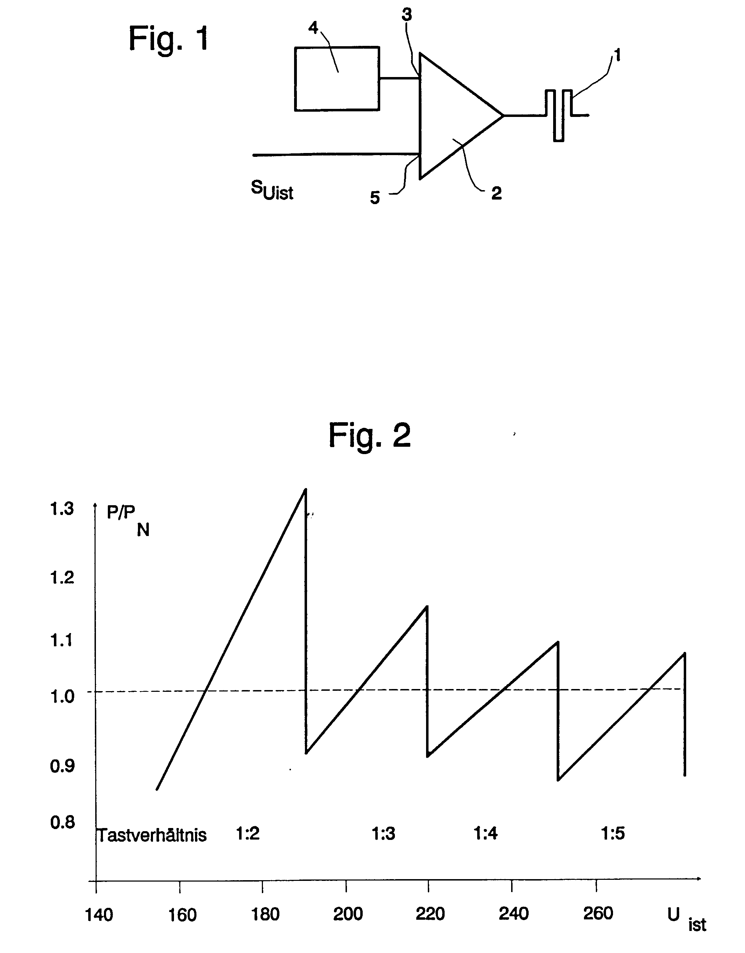

In der Fig. 1 ist mit der Bezugszahl 1 ein bekannter Glühzünder dargestellt, der unter dem Begriff "Hot Surface Igniter (HSI)" in der Fachwelt geläufig ist. Dieser Glühzünder 1 wird von einem Leistungssteller 2 mit Spannung und Strom versorgt. Dieser Leistungssteller 2 besitzt einen ersten Eingang 3, der mit einem Sollwertgeber 4 verbunden ist. An einem zweiten Eingang 5 des Leistungsstellers 2 liegt ein Signal S_{Uist} an, das die tatsächliche Höhe der Versorgungsspannung Uᵢₛₜ für einen Feuerungsautomaten darstellt. Das Signal S_{Uist} repräsentiert die jeweils aktuelle Spannung, also den herrschenden Istwert, der in gewissen Grenzen schwanken kann.

Der Sollwertgeber 4 gibt ein Signal ab, das einen Sollwert einer Netzspannung von 120 Volt repräsentiert.

Der Leistungssteller 2 vergleicht die an seinen Eingängen 3 und 5 anliegenden Signale und erzeugt ein aus einzelnen Paketen von Sinuswellen einer Wechselspannung bestehendes Ausgangssignal mit einem solchen Tastverhältnis TV, daß die am Glühzünder 1 umgesetzte Leistung bei der herrschenden Spannung Uᵢₛₜ annähemd gleich groß ist wie jene Leistung, die am Glühzünder 1 umgesetzt wird, wenn dieser an einer Nennspannung von 120 Volt betrieben wird. Das Tastverhältnis TV wird demgemäß in Abhängigkeit von der Spannung Uᵢₛₜ variiert. Dabei erfolgt dann Ein- und Abschalten des Strompfades in bekannter Weise immer im Moment des Nulldurchgangs, so daß keine Störimpulse entstehen.

Beträgt die Spannung Uᵢₛₜ 230 Volt, so nimmt das Tastverhältnis TV den Wert 1:4 an, was bedeutet, daß nur ein Viertel aller Sinusschwingungen, z.B. jede vierte volle Sinusschwingung der Spannung an den Glühzünder 1 gelangt. Damit ist die am Glühzünder 1 umgesetzte Leistung etwa gleich groß wie dann, wenn der Glühzünder 1 an 120 Volt betrieben wird. Beträgt die Spannung Uᵢₛₜ nur 210 Volt, so nimmt das Tastverhältnis TV den Wert 1:3 an, so daß nur ein Drittel aller Sinusschwingungen, z.B. jede dritte volle Sinusschwingung der Spannung an den Glühzünder 1 gelangt. Bei einer Spannung von 210 Volt und einem Tastverhältnis TV von 1:3 ist die am Glühzünder 1 umgesetzte Leistung wiederum etwa gleich groß wie beim Betrieb an 120 Volt.

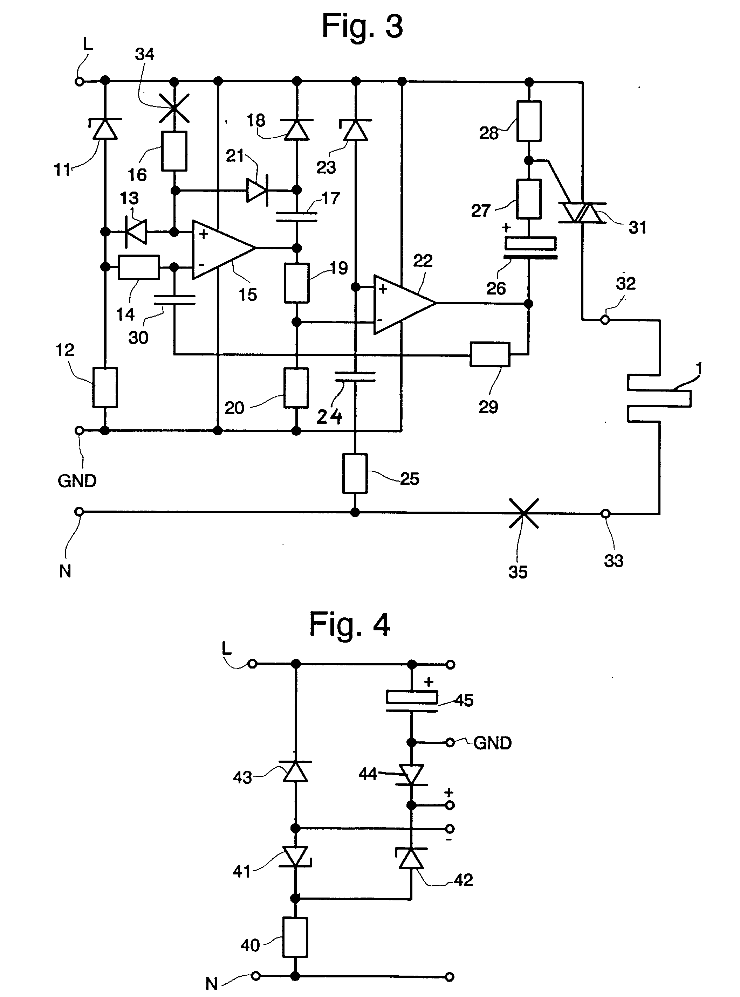

In der Fig. 3 ist eine erfindungsgemäße Ausführung des Leistungsstellers 2 dargestellt, die auch den Sollwertgeber 4 beinhaltet. Mit L ist der Phasenanschluß der Netzspannung bezeichnet, mit N der Nulleiter der Netzspannung und mit GND eine Bezugserde. Eine nicht dargestellte Gleichspannungsquelle ist mit ihrem Pluspol an den Phasenanschluß L angeschlossen. Deren Minuspol bildet die Bezugserde GND. Am Phasenanschluß L ist eine erste Zenerdiode 11 katodenseitig angeschlossen. Deren Anodenanschluß steht einerseits über einen ersten Widerstand 12 mit der Bezugserde GND in Verbindung, andererseits mit dem Katodenanschluß einer ersten Diode 13 und einem zweiten Widerstand 14, dessen zweiter Anschluß am invertierenden Eingang eines ersten Operationsverstärkers 15 liegt. Der Anodenanschluß der Diode 13 ist mit dem nicht invertierenden Eingang des Operationsverstärkers 15 verbunden, der über einen dritten Widerstand 16 mit dem Phasenanschluß L in Verbindung steht. Der Ausgang des Operationsverstärkers 15 ist einerseits über einen ersten Kondensator 17 und eine zweite Diode 18 mit dem Phasenanschluß L verbunden, wobei die Diode 18 mit ihrem Katodenanschluß am Phasenanschluß L liegt, und andererseits über eine zwei weitere, hintereinandergeschaltete Widerstände 19, 20 mit der Bezugserde GND verbunden. Zwischen dem nicht invertierenden Eingang des Operationsverstärkers 15 und dem anodenseitigen Anschluß der Diode 18 liegt eine weitere Diode 21 und zwar so, daß die Anode der Diode 21 am nicht invertierenden Eingang des Operationsverstärkers 15 liegt.

Der Verbindungspunkt der Widerstände 19 und 20 ist an den invertierenden Eingang eines zweiten Operationsverstärkers 22 angeschlossen. Der nicht invertierende Eingang des Operationsverstärkers 22 ist einerseits über eine zweite Zenerdiode 23 mit dem Phasenanschluß L verbunden, wobei diese mit ihrem Katodenanschluß am Phasenanschluß L liegt, und andererseits über einen zweiten Kondensator 24 und einen weiteren Widerstand 25 mit dem Nulleiter N.

Am Ausgang des Operationsverstärkers 22 ist ein weiterer Kondensator 26 angeschlossen, dessen zweiter Anschluß mit einer Reihenschaltung zweier weiterer Widerstände 27 und 28 verbunden ist. Der Ausgang des Operationsverstärkers 22 ist zusätzlich über einen weiteren Widerstand 29 und einen weiteren Kondensator 30 auf den invertierenden Eingang des Operationsverstärkers 15 zurückgeführt.

Der Verbindungspunkt der Widerstände 27 und 28 ist an den Steueranschluß eines Triacs 31 geführt. Dessen eine Anode liegt am Phasenanschluß L, während die zweite Anode auf einen ersten Anschlußpunkt 32 geführt ist, an den der Glühzünder 1 anschließbar ist. Der Glühzünder 1 ist andererseits an einen zweiten Anschlußpunkt 33 anschließbar, der mit dem Nulleiter N verbunden ist.

Wesentlich ist, daß die beiden Operationsverstärker 15 und 22 Typen mit Gegentaktausgang sind.

Nicht eingezeichnet sind übliche Elemente eines Feuerungsautomaten, die zwar für die Funktion des Feuerungsautomaten wesentlich sind, aber mit der Funktion der Ansteuerung des Glühzünders 1 nichts zu tun haben. Der Vollständigkeit halber sei aber erwähnt, daß zwischen dem Widerstand 16 und dem Phasenanschluß L an einer Stelle 34 ein Schaltelement vorhanden sein kann, das von einem Flammensignalverstärker betätigbar ist. Ebenso können sich zwischen dem Nulleiter N und dem Anschlußpunkt an einer Stelle 35 Kontakte einer Sicherheitskette befinden. Der vorstehend beschriebene Teil der Schaltung ist schon aus DE-U1-93 10 461 (Fig.3) bekannt. Hinsichtlich deren Funktion wird auf dieses Dokument verwiesen, in dem auch eine Bauteile-Liste enthalten ist.

Zur Verdeutlichung der Funktionsweise seien noch die folgenden Ausführungen angefügt. Sobald der Kondensator 17 den Referenzwert (entspricht dem Spannungsabfall über dem Widerstand 12) erreicht hat, geht der Ausgang des Operationsverstärkers 15 auf HIGH und folglich auch der invertierende Eingang des Operationsverstärkers 22.

Wesentlich ist noch das Folgende: In der Fig.4 ist auch ein Teil der Spannungsquelle für die Schaltung dargestellt, nämlich ein zwischen dem Phasenanschluß L und der Bezugserde GND liegender Kondensator 45 und eine Reihenschaltung eines Widerstands 40 und einer Diode 44, die zwischen der Bezugserde GND und dem Nulleiter L liegt. Dabei liegt die Katode der Diode 44 am Nulleiter L. Die Spannungsquelle enthält als das die Versorgungsspannung bestimmende Element den Kondensator 45, der beispielsweise eine Kapazität von 100 µF aufweist. Die Versorgungsspannung ist also nicht stabilisiert, sondern weist Schwankungen auf: Während der positiven Netzhalbwelle steigt die Spannung, während der negativen Netzhalbwelle sinkt sie etwas ab. Dadurch wird auch das Aufladen des Kondensators 17 nicht ganz gleichmäßig erfolgen, jedoch ist die Abweichung sehr geringfügig. Die Schwankungen der Spannung am Kondensator 45 wirken sich hingegen unmittelbar auf den Spannungsteiler Zenerdiode 11/Widerstand 12 aus: Während der positiven Netzhalbwelle steigt der Referenzwert leicht an, während der negativen Netzhalbwelle sinkt er leicht ab. Das führt dazu, daß die Spannung am Kondensator 17 den Referenzwert nur während einer negativen Halbwelle erreichen kann.

Da während der negativen Netzhalbwelle der nicht invertierende Eingang des Operafionsverstärker 22 auf HIGH liegt, schaltet der Ausgang des Operationsverstärkers 22 mit Beginn der positiven Netzhalbwelle (HIGH minus 7,5 Volt am invertierenden Eingang des Operationsverstärkers 22, entspricht LOW) auf LOW.

Mit Beginn der negativen Netzhalbwelle wechselt der nicht invertierende Eingang des Operationsverstärkers 22 auf HIGH plus 0,7 Volt und damit der Ausgang des Operationsverstärkers 22 auf HIGH. Dieser Signalwechsel setzt über den Kondensator 30 den Ausgang des Operationsverstärkers 15 auf LOW zurück und damit auch den invertierenden Eingang des Operationsverstärkers 22.

Wichtig ist in diesem Zusammenhang, daß der nicht invertierende Eingang des Operationsverstärkers 22 als Logikpegel wirkt. Während der positiven Netzhalbwelle liegt der Pegel auf HIGH minus 7,5 Volt (entspricht LOW) und während der negativen Netzhalbwelle auf HIGH plus 0,7 Volt (entspricht HIGH). Da der invertierende Eingang des Operationsverstärkers 22 maximal HIGH-Pegel erreichen kann, kann der Ausgang des Operationsverstärkers 22 nur mit der positiven Halbwelle (HIGH minus 7,5 Volt) einen Signalwechsel vollziehen.

Ist an der Stelle 34 ein von einem Flammensignalverstärker betätigter Schalter vorhanden, der beispielsweise eine Transistor sein kann, dann wird in dem Moment, da das Flammensignal erscheint, dieser Schalter geöffnet, so daß der Kondensator 17 nachfolgend nicht mehr aufgeladen werden kann. In der Folge unterbleibt anschließend das Heizen des Glühzünders 1.

Der bisher beschriebene Teil der Schaltung ergibt eine Lösung, bei der das Tastverhältnis TV von 1:n dadurch gekennzeichnet ist, daß von n aufeinanderfolgenden Wellenzügen nur ein einziger am Glühzünder 1 wirksam werden kann, während n-1 aufeinanderfolgende Wellenzüge gesperrt bleiben.

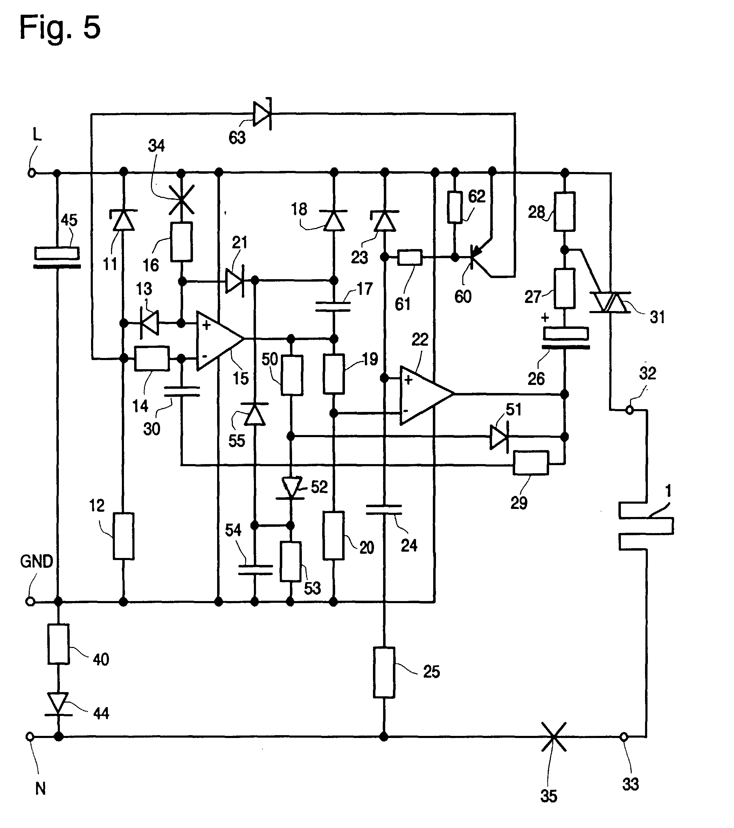

Nachstehend wird nun in Fig.5 jener Teil der Schaltung beschrieben, die das Wesen dieser Erfindung ausmacht, nämlich eine verbesserte Leistungsanpassung durch die Möglichkeit der Bildung von nicht ganzzahligen Tastverhältnissen TV, ohne daß dabei eine der üblichen, relativ aufwendigen Schaltungen für Vollwellen-lmpulspaket-Steuerungen erforderlich wäre.

An den Ausgang des Operationsverstärkers 15 ist ein Widerstand 50 angeschlossen, dessen zweiter Anschluß zum einen mit dem Anodenanschluß einer weiteren Diode 51 verbunden ist, zum anderen mit dem Anodenanschluß einer weiteren Diode 52. Der Katodenanschluß der Diode 51 ist an den Ausgang des Operationsverstärkers 22 angeschlossen. Der Katodenanschluß der Diode 52 ist sowohl mit einem weiteren Widerstand 53 als auch mit einem weiteren Kondensator 54 verbunden. Der zweite Anschluß des Widerstands 53 und des Kondensators 54 sind an die Bezugserde GND angeschlossen, so daß diese beiden Elemente zueinander parallel liegen. Am gemeinsamen Anschlußpunkt von Diode 52, Widerstand 53 und Kondensator 54 liegt zusätzlich der Anodenanschluß einer weiteren Diode 55, deren Katodenanschluß mit dem Katodenanschluß der Diode 21 verbunden ist. Die soeben erwähnten zusätzlichen Bauelemente bilden einen Kompensationsintegrator, dessen Funktion anschließend beschrieben werden wird.

Beim zuvor beschriebenen Umschalten des Operationsverstärkers 15 nach der Fig 3, bei dem dessen Ausgang von LOW auf HIGH wechselt, beginnt die Aufladung des Kondensators 54 über den Widerstand 50 und die Diode 52. Die Aufladung des Kondensators 54 wird beendet, sobald der Ausgang des Operationsverstärkers 22 auf LOW wechselt, indem dann die Diode 51 den Ladestrom ableitet. Die Ladung des Kondensators 54 dauert also bis zum nächsten Nulldurchgang der Spannung.

Sobald der Ausgang des Operationsverstärkers 15 von HIGH auf LOW wechselt, wird ein Teil der Ladung des Kondensators 54 auf den Kondensator 17 übertragen. Damit ändert sich auch die Zeitspanne bis zum Signalwechsel des Ausgangs des Operationsverstärkers 15 von LOW auf HIGH. Je höher die Spannung am Kondensator 54 wird, desto früher erfolgt der Signalwechsel am Ausgang des Operationsverstärkers 15. Die Aufladezeit für den Kondensator 54 vergrößert sich damit. Diese positive Rückkopplung verschiebt schließlich den Signalwechsel in eine frühere negative Halbwelle.

Bei einem Tastverhältnis TV von 1:4 befindet sich der Kippzeitpunkt normalerweise in der dritten negativen Halbwelle. Durch die Veränderung der Zeitspanne bis zum Signalwechsel des Ausgangs des Operationsverstärkers 15 gemäß vorstehender Beschreibung verlagert sich der Kippzeitpunkt in die zweite negative Halbwelle, was zu einem Tastverhältnis TV von 1:3 führt. Gleichzeitig verringert sich damit die Ladezeit des Kondensators 54, wodurch sich die nächste Sperrzeit wieder verlängert und das Tastverhältnis TV wieder zu 1:4 wird. Damit beginnt der Zyklus wieder von vorn. Über einen ganzen Zyklus gesehen entsteht somit ein Tastverhältnis, dessen Kehrwert nicht ganzzahlig ist. Damit wird eine genauere Anpassung der Leistung des Glühzünders 1 an die effektiv wirksame Spannung erreicht.

Die Dimensionierung der zusätzlichen Bauteile ist vorteilhaft wie folgt:

| | |
|---|---|
| Widerstand 50 | 62 kOhm |
| Diode 51 | 1N4148 |
| Diode 52 | 1N4148 |
| Widerstand 53 | 330 kOhm |
| Kondensator 54 | 330 nF |
| Diode 55 | 1N4148 |

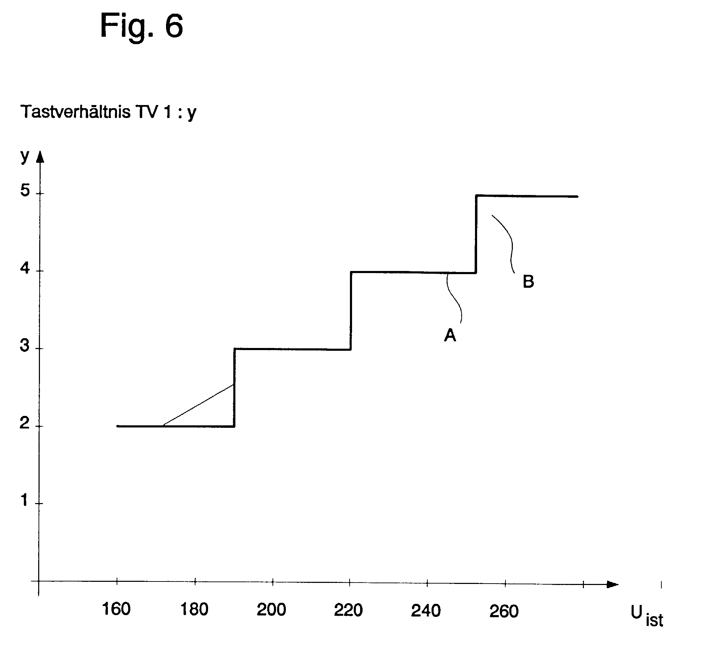

In der Fig. 6 ist das Tastverhältnis TV als Funktion der Spannung dargestellt. Die Kurve A zeigt das Tastverhältnis für die Schaltung nach dem DE-U1-93 10 461, die Kurve B jenes für die Schaltung gemäß Fig. 5. Hier wird die verbesserte Leistungssteuerung sichtbar.

Bei der Beschreibung der Schaltung der DE-U1-93 10 461 (Fig 3) war erwähnt worden, daß die Schaltung im Hinblick auf die Eigenschaften der Spannungsversorgung so ausgelegt sein muß, daß der Triac nur zu Beginn einer positiven Netzhalbwelle gezündet werden kann. Bei der erfindungsgemäßen Schaltung nach Fig. 5 ist wegen einer anderen Bauweise der Spannungsversorgung eine andere Art verwirklicht, dies sicherzustellen. Hier ist in die Schaltung eine zusätzliche Triggerstufe eingebaut worden, die aus einem Transistor 60, einem Basis-Widerstand 61 einem weiteren Widerständen 62 und einer Zenerdiode 63 besteht. Geschaltet sind diese Elemente wie folgt: Der Basis-Widerstand 61 liegt einerseits am nicht invertierenden Eingang des Operationsverstärkers 22, andererseits am Basisanschluß des Transistors 60. An diesem Basisanschluß liegt außerdem der Widerstand 62, dessen zweiter Anschluß mit dem Phasenanschluß L verbunden ist. Der Kollektor des Transistors 60 ist mit der Katode der Zenerdiode 63 und deren Anode mit dem Verbindungspunkt von Diode 11 und Widerstand 12 verbunden, während der Emitter des Transistors 60 zum Phasenanschluß L geführt ist.

Die Dimensionierung der vorgenannten zusätzlichen Bauteile ist wie folgt:

| | |
|---|---|
| Transistor 60 | BC556B |
| Widerstand 61 | 430 kOhm |
| Widerstand 62 | 470 kOhm |
| Diode 63 | BZX55 - 3,6 V |

Diese Triggerstufe wirkt auf den invertierenden Eingang des Operationsverstärkers 15. Sie hält den nicht invertierenden Eingang während der positiven Netzhalbwellen sicher auf einem HIGH-Pegel. Damit wird erreicht, daß der Ausgang des Operationsverstärkers 15 während der positiven Netzhalbwellen nicht von LOW auf HIGH wechseln kann. Die Auslösung eines Triggerimpulses für den Triac 31 kann entsprechend nur zu Beginn einer positiven Netzhalbwelle erfolgen.

Die vorgenannte Triggerstufe ist dann nicht erforderlich, wenn in Verbindung mit der Schaltung nach Fig. 5 nicht die aus dem Vorwiderstand 40 und der Diode 44 gebildete Ladeschaltung für den Kondensator 45 verwendet wird, sondern eine Spannungsversorgung entsprechend der Fig. 4 von DE-U1-93 10 461. Bei abweichend aufgebauten Spannungsversorgungen kann sie aber wiederum vorteilhaft sein.

Der erfindungsgemäße Feuerungsautomat erlaubt die Verwendung von für den Betrieb an 120 Volt ausgelegten Glühzündem 1 an höheren Netzspannungen, beispielsweise 230 Volt. Der direkte Betrieb eines solchen Glühzünders 1 an einer solchen Netzspannung bietet den Vorteil, daß der Glühzünder 1 gleichzeitig auch als Fühlerelektrode eines lonisationsfühlers zur Flammenüberwachung eingesetzt werden kann.

## Patentansprüche

1. Feuerungsautomat mit Mitteln zur Ansteuerung eines Glühzünders (1), durch die der Glühzünder (1) mittels Netzspannung aufheizbar ist, bei dem zwischen einen Anschluß für die Netzspannung und den Glühzünder (1) ein Leistungssteller (2) geschaltet ist, der die Netzspannung mit einem veränderbaren Tastverhältnis TV taktet, so daß nur ein Teil von Vollwellenzügen der Netzspannung am Glühzünder (1) wirksam wird, wobei der Leistungssteller (2) das Tastverhältnis TV nach Maßgabe des Verhältnisses der auslegungsmäßigen Nennspannung und der Netzspannung so verändert, daß die am Glühzünder (1) umgesetzte Verlustleistung annähemd konstant ist, dadurch gekennzeichnet, daß der Leistungssteller (2) einen Kompensationsintegrator (50, 51, 52, 53, 54, 55) aufweist, der aus einem Kondensator (54), Widerständen (50, 53) und Dioden (51, 52, 55) besteht, dessen Kondensator (54) innerhalb einer negativen Netzhalbwelle geladen wird und dessen Ladung beim Umschalten des Ausgangssignals eines Operationsverstärkers (15) von HIGH auf LOW teilweise auf einen Kondensator (17) übertragen wird.

2. Feuerungsautomaten nach Anspruch 1, dadurch gekennzeichnet, daß dem invertierenden Eingang des Operationsverstärkers (15) eine Triggerstufe (60, 61, 62, 63) vorgeschaltet ist, die Ansteuerung eines zweiten Operationsverstärkers (22) durch den ersten Operationsverstärker (15) innerhalb einer positiven Netzhalbwelle verhindert.

3. Feuerungsautomat nach Anspruch 2, dadurch gekennzeichnet, daß die Triggerstufe (60, 61, 62, 63) aus einem Transistor (60), einem Basis-Widerstand (61), einem zwischen den Basisanschluß und den Emitteranschluß des Transistors (60) geschalteten Widerstand (62) und einer Zenerdiode (63) besteht, wobei der Basis-Widerstand (61) zwischen den nicht invertierenden Eingang des zweiten Operationsverstärkers (22) und den Basisanschluß des Transistors (60) geschaltet und die Zenerdiode (63) katodenseitig an den Kollektor des Transistors (60) und anodenseitig an den Verbindungspunkt einer Zenerdiode (11) und eines Widerstands (12) angeschlossen ist.

## Claims

1. An automatic firing arrangement having means for actuating a hot surface igniter (1), by which the hot surface igniter (1) can be heated up by means of mains voltage, wherein connected between a terminal for the mains voltage and the hot surface igniter (1) is a power setting member (2) which cycles the mains voltage with a variable pulse duty factor TV so that only a part of full-wave trains of the mains voltage becomes operative at the hot surface igniter (1), wherein the power-setting member (2) varies the pulse duty factor TV in accordance with the ratio of the design rated voltage and the mains voltage in such a way that the power loss which is converted at the hot surface igniter (1) is approximately constant, characterised in that the power-setting member (2) has a compensation integrator (50, 51, 52, 53, 54, 55) which comprises a capacitor (54), resistors (50, 53) and diodes (51, 52, 55) and whose capacitor (54) is charged within a negative mains half-wave and whose charge is partially transferred onto a capacitor (17) when the output signal of an operational amplifier (15) switches over from HIGH to LOW.

2. An automatic firing arrangement according to claim 1 characterised in that connected upstream of the inverting input of the operational amplifier (15) is a trigger stage (60, 61, 62, 63) which prevents the actuation of a second operational amplifier (22) by the first operational amplifier (15) within a positive mains half-wave

3. An automatic firing arrangement according to claim 2 characterised in that the trigger stage (60, 61, 62, 63) comprises a transistor (60) a base resistor (61), a resistor (62) connected between the base terminal and the emitter terminal of the transistor (60) and a Zener diode (63), wherein the base resistor (61) is connected between the non-inverting input of the second operational amplifier (22) and the base terminal of the transistor (60) and the Zener diode (63) is connected at the cathode side to the collector of the transistor (60) and at the anode side to the connecting point of a Zener diode (11) and a resistor (12).

## Revendications

1. Dispositif automatique d'allumage comportant des moyens pour commander un dispositif d'allumage par incandescence (1), et à l'aide duquel le dispositif d'allumage par incandescence peut être chauffé à l'aide de la tension du réseau, et dans lequel entre une borne pour la tension du réseau et le dispositif d'allumage par incandescence (1) est disposé un régulateur de puissance (2), qui commande de façon cadencée la tension du réseau avec un taux d'impulsions TV variable de sorte que seule une partie de trains d'ondes complets de la tension du réseau devient active au niveau du dispositif d'allumage par incandescence, le régulateur de puissance (2) modifiant le taux d'impulsions TV en fonction du rapport de la tension nominale fixée lors de la conception et la tension du réseau de sorte que la puissance dissipée convertie dans le dispositif d'allumage par incandescence (1) est approximativement constante, caractérisé en ce que le régulateur de puissance (2) possède un intégrateur de compensation (50, 51, 52, 53, 54, 55), qui est constitué par un condensateur (54), des résistances (50, 53) et des diodes (51, 52, 55) et dont le condensateur (54) est chargé au cours d'une alternance négative du réseau et dont la charge est transmise en partie à un condensateur (17) lors de la commutation du signal de sortie d'un amplificateur opérationnel (15) du niveau HIGH (haut) au niveau LOW (bas).

2. Dispositif d'allumage automatique selon la revendication 1, caractérisé en ce qu'en amont de l'entrée inverseuse de l'amplificateur opérationnel (15) est branché un étage de déclenchement (60, 61,62, 63), qui empêche la commande d'un second amplificateur opérationnel (22) par le premier amplificateur opérationnel (15) au cours d'une alternance positive.

3. Dispositif d'allumage automatique selon la revendication 2, caractérisé en ce que l'étage de déclenchement (60, 61, 62, 63) est constitué par un transistor (60), une résistance de base (61), une résistance (62) branchée entre la borne de base et la borne d'émetteur du transistor (60), une diode Zener (63), la résistance de base (61) étant branchée entre l'entrée non inverseuse du second amplificateur opérationnel (22) et la borne de base du transistor (60), tandis que la diode Zener (63) est raccordée côté cathode au collecteur du transistor (60) et, côté anode, au point de jonction d'une diode Zener (11) et d'une résistance (12).
